# EUROPEAN PATENT APPLICATION

(11) **EP 4 489 030 A1**
(43) Date of publication of application: **08.01.2025**
(21) Application number: 23759537.6
(22) Date of filing: 20.01.2023
(51) Int. Cl.: H01B 1/06, C01D 15/02, C03C 10/00, H01B 1/10

(54) **SOLID SULFIDE ELECTROLYTE MATERIAL**

(30) Priority: 28.02.2022 JP 2022030426
(71) Applicant: Tokyo Institute of Technology, Tokyo 152-8550 (JP)
(72) Inventor: KANNO, Ryoji, Tokyo 152-8550 (JP); HORI, Satoshi, Tokyo 152-8550 (JP); LI, Yuxiang, Tokyo 152-8550 (JP)
(74) Representative: Vossius & Partner Patentanwälte Rechtsanwälte mbB
(86) International application number: PCT/JP2023/001743
(87) International publication number: WO 2023/162531

(57) **Abstract**

To provide a sulfide solid electrolyte material having lithium-ion conductivity substantially equal to or exceeding that of LGPS.

A sulfide solid electrolyte material, having the composition:
Li_{9.54}[Si_{1-δ}M_{δ}]_{1.74}P_{1.44}S_{11.1}Br_{0.3}O_{0.6},
Li_{9.54}[Si_{1-δ}M_{δ}]_{1.74}P_{1.44}S_{11.7}Br_{0.3},
Li_{9.714}[Si_{1-δ}M'_{δ}]_{1.74}P_{1.44}S_{11.1}Br_{0.3}O_{0.6}, or
Li_{9.714}[Si_{1-δ}M'_{δ}]_{1.74}P_{1.44}S_{11.7}Br_{0.3}, wherein
M is Ge, Sn, or Ti, and M' is either B or Al,
when M is Ge, 0 ≤ δ ≤ 0.5,
when M is Sn, 0 ≤ δ ≤ 0.4,
when M is Ti, 0 ≤ δ ≤ 0.1,
when M' is B, 0 ≤ δ ≤ 0.1, and
when M' is Al, 0 ≤ δ ≤ 0.1.

## Description

### FIELD

The present invention relates to a novel sulfide solid electrolyte material.

### BACKGROUND

In recent years, with the rapid spread of information-related devices and communication devices such as personal computers, video cameras, and mobile phones, the development of batteries, which are used as the power sources for these devices, has been regarded as important. In the automobile industry, development of high-output, high-capacity batteries for electric vehicles and hybrid vehicles is also underway. Among various types of batteries, lithium batteries are currently attracting attention because of their high energy density.

Since currently available lithium batteries use electrolyte solutions containing flammable organic solvents, they require the installation of safety devices to suppress temperature rises during short circuits and improvements to the structure and materials to prevent short circuits. Conversely, since lithium batteries which use a solid electrolyte layer in place of an electrolyte solution to create an all-solid-state battery do not use flammable organic solvents, safety devices can be simplified and they are thought to be superior in terms of production costs and productivity. However, the current situation is that the energy density of all-solid-state lithium batteries is lower than that of liquid batteries.

Sulfide solid electrolyte materials are known as solid electrolyte materials used in all-solid-state lithium batteries. For example, Li-P-S sulfide solid electrolytes have been reported (refer to, for example, Non-Patent Literature 1 to 5). However, the ionic conductivity of the reported crystalline sulfides is approximately 10⁻⁷ to 10⁻⁴ Scm⁻², and high energy density in an all-solid-state lithium battery has not been sufficiently achieved.

Non-Patent Literature 6 reports regarding Li₁₀GeP₂S₁₂ (hereinafter sometimes referred to as "LGPS-based sulfide solid electrolyte", "LGPS", etc.), which exhibits high ionic conductivity on the order of 1.2×10⁻² Scm⁻¹, which is comparable to that of an electrolyte solution. However, the search for materials other than LGPS continues, and it is naturally desired that such new solid electrolytes have an ionic conductivity substantially equal to or exceeding that of LGPS.

### [CITATION LIST]

### [NON-PATENT LITERATURE]

[NPL 1] K. Homma, M. Yonemura, T. Kobayashi, M. Nagao, M. Hirayama, R. Kanno, Solid State Ionics, 182, pp. 53-58 (2011)
[NPL 2] H. Yamane, M. Shibata, Y. Shimane, T. Junke, Y. Seino, S. Adams, K. Minami, A. Hayashi, M. Tatsumisago, Solid State Ionics, 178, pp. 1163-1167 (2007)
[NPL 3] R. Mercier, J.P. Malugani, B. Fahys, J. Douglande, G. Robert, J. Solid State Chem., 43, pp. 151-162 (1982)
[NPL 4] S.T. Kong, O. Gun, B. Koch, H.J. Deiseroth, H. Eckert, C. Reiner, Chemistry - A European Journal, 16, pp. 5138-5147 (2010)
[NPL 5] K. Homma, M. Yonemura, M. Nagao, M. Hirayama, R. Kanno, J. Phys. Soc. Jpn., 79, pp. 90-93 (2010)
[NPL 6] N. Kamaya, K. Homma, Y. Yamakawa, M. Hirayama, R. Kanno, M. Yonemura, T. Kamiyama, Y. Kato, S. Hama, K. Kawamoto, A. Mitsui, Nat. Mater., 10, pp. 682- 686 (2011)
[NPL 7] Y.G. Lee et al. Nat. Energy 5, pp. 299-308 (2020)
[NPL 8] Y. Kato et al. J. Phys. Chem. Lett. 9, pp. 607-613 (2018)
[NPL 9] D.H.S. Tan et al. Science 373, pp. 1494-1499 (2021)
[NPL 10] C. Doerrer et al. ACS Appl. Mater. Interfaces 13, pp. 37809-37815 (2021)
[NPL 11] L. Zhou et al. Nat. Energy 7, pp. 83-93 (2022)
[NPL 12] S. Wang et al. Adv. Energy Mater. 11, 2101370 (2021)

### SUMMARY

### [TECHNICAL PROBLEM]

The present invention has been conceived in light of the problems described above, and an object thereof is to provide a sulfide solid electrolyte material having lithium-ion conductivity substantially equal to or exceeding that of LGPS.

### [SOLUTION TO PROBLEM]

In order to achieve the object described above, the present invention provides the following means.

[1] A sulfide solid electrolyte material, having the composition:
   Li_{9.54}[Si_{1-δ}M_{δ}]_{1.74}P_{1.44}S_{11.1}Br_{0.3}O_{0.6},
   Li_{9.54}[Si_{1-δ}M_{δ}]_{1.74}P_{1.44}S_{11.7}Br_{0.3},
   Li_{9.714}[Si_{1-δ}M'_{δ}]_{1.74}P_{1.44}S_{11.1}Br_{0.3}O_{0.6}, or
   Li_{9.714}[Si_{1-δ}M'_{δ}]_{1.74}P_{1.44}S_{11.7}Br_{0.3}, wherein
   M is Ge, Sn, or Ti, and M' is either B or Al,
   when M is Ge, 0 ≤ δ ≤ 0.5,
   when M is Sn, 0 ≤ δ ≤ 0.4,
   when M is Ti, 0 ≤ δ ≤ 0.1,
   when M' is B, 0 ≤ δ ≤ 0.1, and
   when M' is Al, 0 ≤ δ ≤ 0.1.
[2] The sulfide solid electrolyte material according to [1], having the composition:
   Li_{9.54}Si_{1.74}P_{1.44}S_{11.1}Br_{0.3}O_{0.6},
   Li_{9.54}[Si_{0.9}Ge_{0.1}]_{1.74}P_{1.44}S_{11.1}Br_{0.3}O_{0.6},
   Li_{9.54}[Si_{0.8}Ge_{0.2}]_{1.74}P_{1.44}S_{11.1}Br_{0.3}O_{0.6},
   Li_{9.54}[Si_{0.7}Ge_{0.3}]_{1.74}P_{1.44}S_{11.1}Br_{0.3}O_{0.6},
   Li_{9.54}[Si_{0.6}Ge_{0.4}]_{1.74}P_{1.44}S_{11.1}Br_{0.3}O_{0.6},
   Li_{9.54}[Si_{0.5}Ge_{0.5}]_{1.74}P_{1.44}S_{11.1}Br_{0.3}O_{0.6},
   Li_{9.54}[Si_{0.9}Sn_{0.1}]_{1.74}P_{1.44}S_{11.1}Br_{0.3}O_{0.6},
   Li_{9.54}[Si_{0.8}Sn_{0.2}]_{1.74}P_{1.44}S_{11.1}Br_{0.3}O_{0.6},
   Li_{9.54}[Si_{0.7}Sn_{0.3}]_{1.74}P_{1.44}S_{11.1}Br_{0.3}O_{0.6},
   Li_{9.54}[Si_{0.6}Sn_{0.4}]_{1.74}P_{1.44}S_{11.1}Br_{0.3}O_{0.6},
   Li_{9.54}[Si_{0.9}Ti_{0.1}]_{1.74}P_{1.44}S_{11.7}Br_{0.3},
   Li_{9.714}[Si_{0.9}B_{0.1}]_{1.74}P_{1.44}S_{11.7}Br_{0.3}, or
   Li_{9.714}[Si_{0.9}Al_{0.1}]_{1.74}P_{1.44}S_{11.1}Br_{0.3}O_{0.6}.
[3] The sulfide solid electrolyte material according to [1] or [2], having the composition of Li_{9.54}[Si_{0.6}Ge_{0.4}]_{1.74}P_{1.44}S_{11.1}Br_{0.3}O_{0.6}.
[4] The sulfide solid electrolyte material according to any one of [1] to [3], having a lithium-ion conductivity of 3.2 × 10⁻² S/cm or more.
[5] The sulfide solid electrolyte material according to any one of [1] to [4], having peaks at positions of 2θ = 12.33±0.04°, 14.34±0.03°, 17.32±0.08°, 20.11±0.07°, 20.33±0.04°, 23.45±0.11°, 23.84±0.05°, 26.83±0.07°, 28.90±0.05°, 29.46±0.22°, 31.52±0.05°, and 33.19±0.06° in X-ray diffraction measurement using CuKα radiation.
[6] The sulfide solid electrolyte material according to any one of [1] to [5], comprising a tetragonal unit cell having a space group of P4₂/nmc(137), wherein
   the unit cell has a crystal structure containing:
      i) Li(2)[S/Br/O]₆ octahedrons,
      ii) Si(1)/M(1)/P(1)[SBr/O]₄ tetrahedrons,
      iii) Si(2)/P(2)[S/Br/O]₄ tetrahedrons,
      iv) Li(4)[S/Br/O]₆ octahedrons, and
      v) Li(1), Li(3a), and Li(3b) sites,
   the i) Li(2)[S/Br/O]₆ octahedrons and the ii) Si(1)/M(1)/P(1)[SBr/O]₄ tetrahedrons form a one-dimensional framework structure,
   the iii) Si(2)/P(2)[S/Br/O]₄ tetrahedrons are positioned between the i) Li(2)[S/Br/O]₆ octahedrons and are connected by corner sharing to form a three-dimensional framework structure,
   the iv) Li(4)[SBr/O]₆ octahedrons are connected to the iii) Si(2)/P(2)[S/Br/O]₄ tetrahedrons by edge sharing, and
   the v) Li atoms at the Li(1), Li(3a), and Li(3b) sites can move along the c-axis, i.e., the [001] direction.

### [ADVANTAGEOUS EFFECTS OF INNOVATION]

The sulfide solid electrolyte material according to an embodiment of the present invention is a novel electrolyte material, and in particular, can achieve a lithium-ion conductivity substantially equal to or exceeding that of LGPS. Furthermore, the sulfide solid electrolyte material according to an embodiment of the present invention also has excellent thermal stability. Thus, by using the sulfide solid electrolyte material according to the present embodiment as a battery material or the like, a battery or the like having a high ion-conductivity can be obtained. In particular, by using the sulfide solid electrolyte material as an electrolyte for an electrode, it is possible to thicken the electrode to about 1 mm.

### BRIEF DESCRIPTION OF DRAWINGS

FIG. 1 shows X-ray diffraction spectra when the ratio of Si atoms substituted with Ge or Sn atoms in a sulfide solid electrolyte material is changed.
FIG. 2 shows schematic views detailing the crystal structure of a sulfide solid electrolyte material according to an embodiment of the present invention.
FIG. 3 shows charge/discharge curves of a cell using a sulfide solid electrolyte material according to an embodiment of the present invention.
FIG. 4 shows graphs representing the composition dependence of unit cell volume and ionic conductivity (cold press) of a sulfide solid electrolyte material according to an embodiment of the present invention.
FIG. 5 shows (A) a DTA curve and (B) an HT-XRD pattern of a sulfide solid electrolyte material (LSiMδPSBrO (Li_{9.54}[Si_{1-δ}M_{δ}]_{1.74}P_{1.44}S_{11.1}Br_{0.3}O_{0.6}; where M = Ge, Sn)) according to an embodiment of the present invention.
FIG. 6 shows the relationship between the volume ratio of anions to cations (crystal structure index, t) and the mass ratio (purity, p) of the LGPS type in a sulfide solid electrolyte material (Li_{9.54}[Si_{1-δ}M_{δ}]_{1.74}P_{1.44}S_{11.7-z}Br_{0.3}O_{z} (where M = Ge, Sn; 0 ≤ δ ≤ 1; and 0 ≤ z ≤ 0.9) according to an embodiment of the present invention. The different marks indicate different compositions.

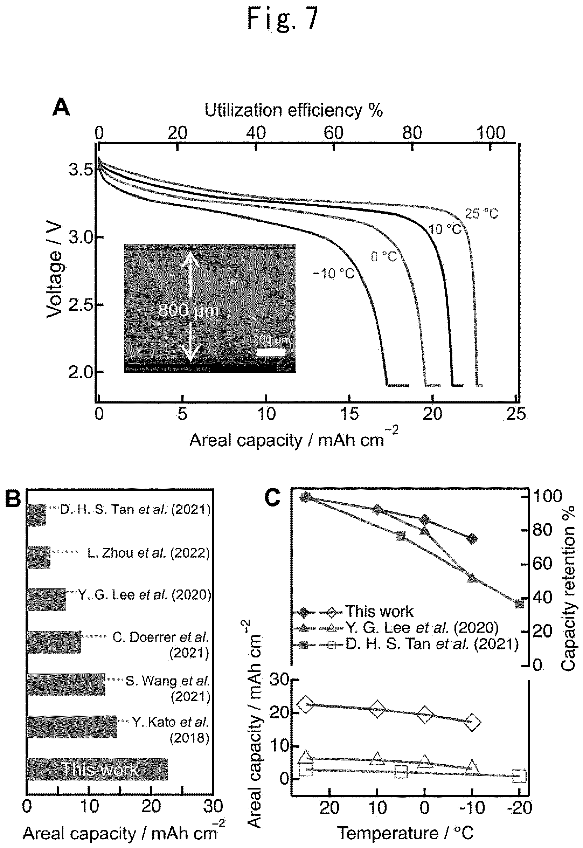

FIG. 7 shows the performance of a cell using a sulfide solid electrolyte material according to an embodiment of the present invention. (A) shows a discharge curve of a thick-film electrode (up to 800 µm) according to an embodiment of the present invention, (B) shows a comparison of areal capacity at 25°C between an embodiment of the present invention and an all-solid-state battery of the Non-Patent Literature, and (C) shows a comparison of areal capacity (bottom) and discharge capacity retention rate (top) at 25°C and a temperature lower than that between an embodiment of the present invention and an all-solid-state battery of the Non-Patent Literature.
FIG. 8 relates to the cycle stability of an all-solid-state battery (electrodes having a thickness of 800 µm) using the sulfide solid electrolyte material according to an embodiment of the present invention. (A) shows the results of confirming operation after conditioning at 25°C before a temperature change test. (B) shows Nyquist plots by EIS after a first charge (top) and after a temperature change test (bottom). (C) shows the results of a cycle test at 25°C.
FIG. 9 shows the discharge curve of an all-solid-state battery (electrodes having a thickness of 1 mm) using a sulfide solid electrolyte material according to an embodiment of the present invention.

### DESCRIPTION OF EMBODIMENTS

The sulfide solid electrolyte material of the present invention will be described in detail below, but the present invention is not limited to the following embodiments.

First, the sulfide solid electrolyte material of the present invention will be described.

The present inventors have discovered that a sulfide solid electrolyte material having a lithium-ion conductivity substantially equal to or exceeding that of LGPS can be obtained by performing anion-cation multiple substitution at an appropriate ratio based on Li₁₀GeP₂S₁₂ (LGPS-based sulfide solid electrolyte). Specifically, the inventors have examined the possibility of expanding the bottleneck of the Li ion path by substituting an isovalent element having a large ionic radius, such as Br or I atoms, at the ion sites in the solid electrolyte. Since such substitution is too large to occupy the ion sites in the crystal structure, the inventors have examined the possibility of simultaneously introducing an element having a small ionic radius, such as O atoms, in order to balance the volume of the ion sites. Furthermore, since the cation species is thought to be closely related to the bottleneck of the LGPS-type electrolyte, the inventors have examined simultaneous substitution of cations in addition to anion substitution. The present invention has been completed as a result of these examinations.

### (Composition)

The sulfide solid electrolyte material according to the present invention has the composition:
Li_{9.54}[Si_{1-δ}M_{δ}]_{1.74}P_{1.44}S_{11.1}Br_{0.3}O_{0.6},
Li_{9.54}[Si_{1-δ}M_{δ}]_{1.74}P_{1.44}S_{11.7}Br_{0.3},
Li_{9.714}[Si_{1-δ}M'_{δ}]_{1.74}P_{1.44}S_{11.1}Br_{0.3}O_{0.6},
Li_{9.714}[Si_{1-δ}M'_{δ}]_{1.74}P_{1.44}S_{11.7}Br_{0.3}, wherein
M is Ge, Sn, or Ti, and M' is either B or Al,
when M is Ge, 0 ≤ δ ≤ 0.5,
when M is Sn, 0 ≤ δ ≤ 0.4,
when M is Ti, 0 ≤ δ ≤ 0.1,
when M' is B, 0 ≤ δ ≤ 0.1, and
when M' is Al, 0 ≤ δ ≤ 0.1.

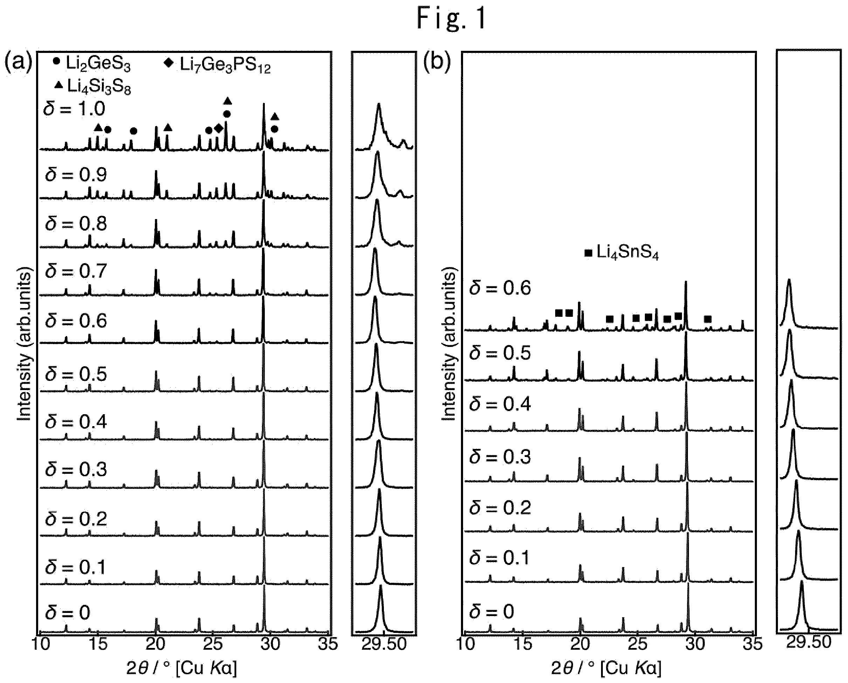

The present inventors first attempted multi-anion substitution with halogen and oxygen, using Li_{9.54}Si_{1.74}P_{1.44}S_{11.7}Cl_{0.3} (LSiPSCl), which is derived from an LGPS-based sulfide solid electrolyte and has a high ionic conductivity of 2.5×10⁻² Scm⁻¹, and further replaced some of the Si atoms with Ge or Sn atoms. FIG. 1 shows the X-ray diffraction spectra when the ratio of Si atoms substituted with Ge or Sn atoms is changed. FIG. 1(A) shows Li_{9.54}[Si_{1-δ}Ge_{δ}]_{1.74}P_{1.44}S_{11.1}Br_{0.3}O_{0.6} (0 ≤ δ ≤ 1) and FIG. 1(B) shows Li_{9.54}[Si_{1-δ}Sn_{δ}]_{1.74}P_{1.44}S_{11.1}Br_{0.3}O_{0.6} (0 ≤ δ ≤ 0.6). The main phase is indexed to the space group P4₂/nmc(137). On the right side of each of FIGS. 1(A) and (B), the patterns around 29.5° are enlarged to show the peak shifts for each group.

The proportion of the contained crystalline phase (phase purity) was determined by Rietveld analysis using the XRD data. In a typical example, the LGPS-type phase purity is determined as the mass proportion of the LGPS-type phase to all compounds identified by Rietveld analysis. The results are shown in Table 1.

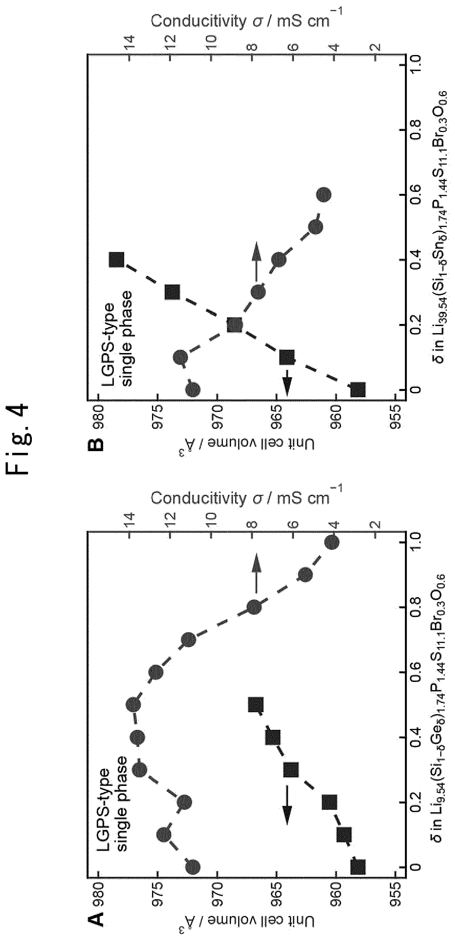

Also shown in FIG. 4 are unit cell constants calculated from radiation X-ray diffraction data. In the LGPS-type LSiMδPSBrO phase, the unit cell volume increases with increasing Ge/Sn content (related to δ), confirming that Si is substituted with Ge or Sn. From this, the solid solubility limits in these LGPS-type phases may be determined.

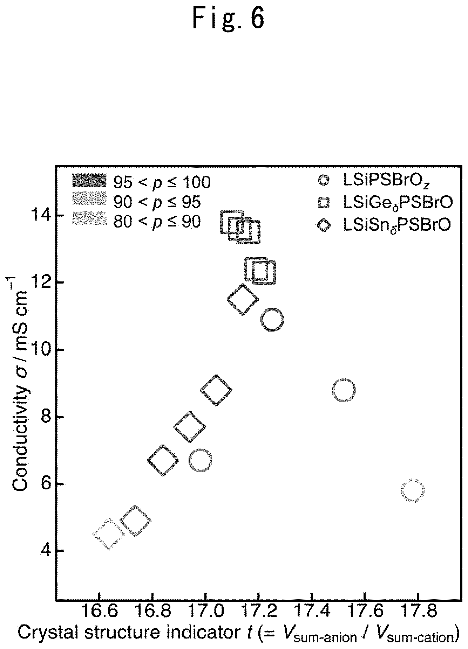

FIG. 6 shows the electrical conductivity of a series of single-phase LSiMδPSBrO samples (pressed powder state with grain boundary resistance at room temperature), some of which have conductivities in excess of 10 mScm⁻¹. In addition, LSiGe_{0.4}PSBrO was evaluated for intracrystalline conductivity at t (crystal structure index) = 17.2, which approximates the maximum phase purity and electrical conductivity, and was confirmed to have an intracrystalline conductivity of 10 mScm⁻¹ or greater.

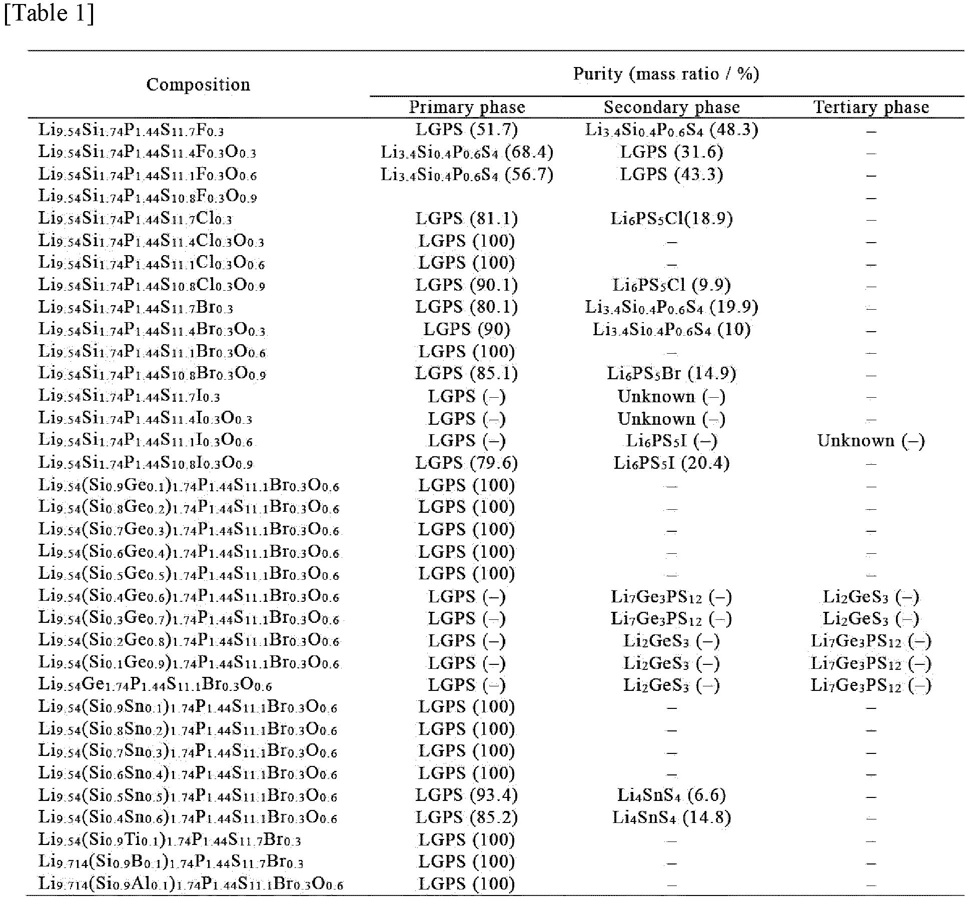

From FIG. 1, it can be understood that as the element substitution ratio (δ) increases, the change in the X-ray diffraction spectrum also increases. According to the crystalline phase proportion (phase purity) by Rietveld analysis in Table 1, the following is confirmed:
- When substituted with Ge, if the substitution ratio (δ) is 0 ≤ δ ≤ 0.5, the LGPS phase is contained at 100 mass%.
- When substituted with Sn, if the substitution ratio (δ) is 0 ≤ δ≤ 0.4, the LGPS phase is contained at 100 mass%.
- Note that when δ = 0, the formula is Li_{9.54}Si_{1.74}P_{1.44}S_{11.1}Br_{0.3}O_{0.6}, and the LGPS phase is contained at 100 mass%.
- When substituted with Ti, it has also been confirmed that if the substitution ratio (δ) is 0 ≤ δ ≤ 0.1, the LGPS phase is contained at 100 mass%.
- When substituted with B, it has also been confirmed that if the substitution ratio (δ) is 0 ≤ δ ≤ 0.1, the LGPS phase is contained at 100 mass%.
- When substituted with Al, it has also been confirmed that if the substitution ratio (δ) is 0 ≤ δ ≤ 0.1, the LGPS phase is contained at 100 mass%.

### (X-ray Diffraction Peaks)

In an embodiment of the present invention, the sulfide solid electrolyte material may have peaks at positions of 20 = 12.33±0.04°, 14.34±0.03°, 17.32±0.08°, 20.11±0.07°, 20.33±0.04°, 23.45±0.11°, 23.84±0.05°, 26.83±0.07°, 28.90±0.05°, 29.46±0.22°, 31.52±0.05°, and 33.19±0.06° in X-ray diffraction measurement using CuKα radiation. The X-ray diffraction peaks are determined by the crystal structure, and the crystal structure is considered to be related to ionic conductivity. The sulfide solid electrolyte material according to the present embodiment is based on Li_{9.54}Si_{1.74}P_{1.44}S_{11.7}Cl_{0.3} (LSiPSCl) which is derived from Li₁₀GeP₂S₁₂ (LGPS) and has a high ionic conductivity of 2.5×10⁻² Scm⁻¹ (bulk conductivity). Thus, in the sulfide solid electrolyte material according to the present embodiment, as shown above, the X-ray diffraction peaks are very similar to those of LGPS and LSiPSCl, and accordingly, the ionic conductivity is substantially the same as or even higher than that of LGPS and LSiPSCl.

### (Ionic Conductivity)

Generally, in practical applications such as batteries, the higher the ionic conductivity, the more preferable. In an embodiment of the present invention, the ionic conductivity may be 1.2×10⁻² Scm⁻¹ or more, preferably 2.5×10⁻² Scm⁻¹ or more, and more preferably 3.2×10⁻² Scm⁻¹ or more. Note that unless otherwise specified, the ionic conductivity refers to the bulk ionic conductivity of a sintered sample, and is measured using the alternating current (AC) impedance method. Detailed measurement conditions will be described later.

The following is an example of the measurement results of the bulk ionic conductivity of a sulfide solid electrolyte material according to an embodiment of the present invention:
·Li_{9.54}[Si_{0.6}Ge_{0.4}]_{1.74}P_{1.44}S_{11.1}Br_{0.3}O_{0.6} 3.2×10⁻² Scm⁻¹

### (Crystal Structure)

The sulfide solid electrolyte material according to an embodiment of the present invention comprises:
a tetragonal unit cell having a space group of P4₂/nmc(137), wherein
the unit cell has a crystal structure containing:
   i) Li(2)[S/Br/O]₆ octahedrons,
   ii) Si(1)/M(1)/P(1)[SBr/O]₄ tetrahedrons,
   iii) Si(2)/P(2)[S/Br/O]4 tetrahedrons,
   iv) Li(4)[S/Br/O]₆ octahedrons, and
   v) Li(1), Li(3a), and Li(3b) sites,
the i) Li(2)[S/Br/O]₆ octahedrons and the ii) Si(1)/M(1)/P(1)[SBr/O]₄ tetrahedrons form a one-dimensional framework structure,
the iii) Si(2)/P(2)[S/Br/O]₄ tetrahedrons are positioned between the i) Li(2)[S/Br/O]₆ octahedrons and are connected by corner sharing to form a three-dimensional framework structure,
the iv) Li(4)[SBr/O]₆ octahedrons are connected to the iii) Si(2)/P(2)[S/Br/O]₄ tetrahedrons by edge sharing, and
the v) Li atoms at the Li(1), Li(3a), and Li(3b) sites can move along the c-axis, i.e., the [001] direction.

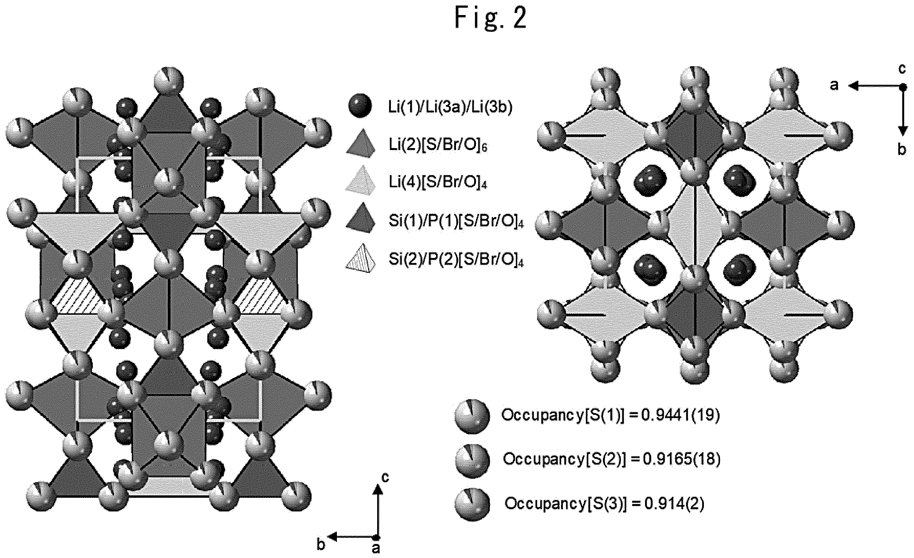

FIG. 2 is a schematic view of the crystal structure described above. In FIG. 2, the crystal structure is illustrated from two directions. The left side of FIG. 2 is the crystal structure as viewed from the a-axis, i.e., the [100] direction, and the right side of FIG. 2 is the crystal structure as viewed from the c-axis, i.e., the [001] direction. In the above crystal structure, two types of octahedra and tetrahedra are intricately associated to form a crystal structure, in which the lithium atoms in the lithium sites can move along the c-axis, i.e., the [001] direction, as shown on the right side of FIG. 2. Though not to be bound by a particular theory, it is believed that the above structure achieves high ionic conductivity. It is considered that the above crystal structure is related to the X-ray diffraction peaks described above.

### (Thermal Stability)

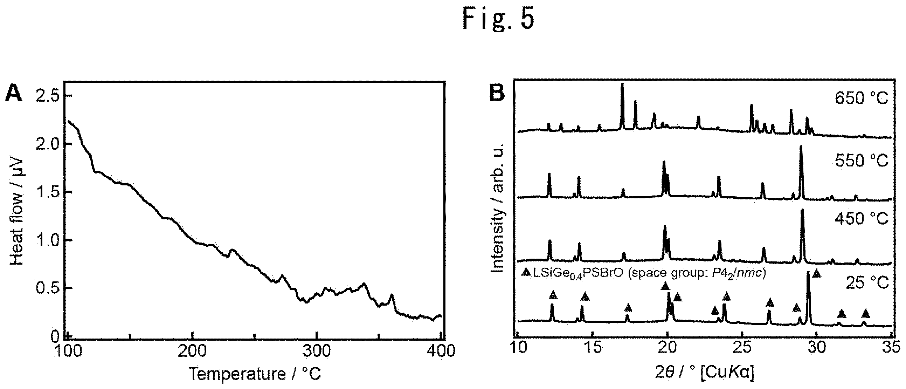

The sulfide solid electrolyte material according to an embodiment of the present invention may be thermally stable up to 400°C. This can be demonstrated by differential thermal analysis (DTA profile) and high temperature X-ray diffraction (HT-XRD) as shown in FIG. 5.

Regarding the solid solution series (Li_{9.54}[Si_{1-δ}M_{δ}]_{1.74}P_{1.44}S_{11.1}Br_{0.3}O_{0.6}; M = Ge, Sn) of LSiMδPSBrO, the DTA profile and HT-XRD were measured using LSiGe_{0.4}PSBrO as the representative phase to investigate the thermal stability of the phase and structure. No signals other than noise were observed in the DTA curve shown in FIG. 5(A), indicating that the LSiGe_{0.4}PSBrO phase is thermally stable up to 400°C without phase change. In fact, the HT-XRD pattern in FIG. 5(B) does not change up to 550°C, which is consistent with the DTA results. The XRD pattern recorded at 650°C is completely different from that at 550°C, which indicates that the crystal structure of LSiGe_{0.4}PSBrO changes between 550°C and 650°C. From this, it can be concluded that the sulfide solid electrolyte material according to an embodiment of the present invention is thermally stable up to 400°C.

### (Production Method)

The sulfide solid electrolyte material, which is an embodiment of the present invention, can be produced by the following means, but the production means is not limited thereto.

The raw material composition for producing the sulfide solid electrolyte material is not particularly limited as long as the desired sulfide solid electrolyte material can be produced, and an element or compound of Li, Si, P, S, Ge, Sn, B, Al, Br, or O can be prepared, and the raw material composition can easily be prepared at the stoichiometric ratio of the composition. From the viewpoint of availability, Li₂S (>99.9% purity, Mitsuwa Chemical Co., Ltd.), P₂S₅ (>99% purity, Sigma Aldrich), SiS₂ (>99% purity, Mitsuwa Chemical Co., Ltd.), GeS₂ (>99.9% purity, Mitsuwa Chemical Co., Ltd.), SnS₂ (>99.9% purity, Mitsuwa Chemical Co., Ltd.), LiF (>99% purity, Sigma Aldrich), LiCl (>99% purity, Sigma Aldrich), LiBr (>99% purity, Sigma Aldrich), LiI (>99% purity, Sigma Aldrich), and P₂O₅ (>99.99% purity, Kojundo Chemical Laboratory Co., Ltd.) may be used. The raw material composition is preferably a powder in consideration of handling in subsequent steps. Hereinafter, the raw material composition may be referred to as a raw material powder.

The raw material powders are mixed in appropriate amounts to obtain a desired composition, to form a precursor powder. The mixing may be performed manually using an agate mortar and an agate pestle. The mixing time may be adjusted appropriately within the range of several seconds to several hours depending on the amounts to be mixed and the degree of mixing.

In addition to or in place of manual mixing, mixing may be performed by mechanical milling. Mechanical milling is a method of mixing the raw material powders while grinding and applying mechanical energy. Mechanical milling is preferable because a large amount of raw material powders can be mechanically mixed. Compared to manual mixing, mechanical milling is preferable because it is easier to finely grind the raw material powders, and the crystal purity of the product can be increased. Examples of such mechanical milling include vibration mills, ball mills, turbo mills, mechanofusion, and disk mills. The conditions of the mechanical milling are not particularly limited as long as the raw material powders can be mixed. As typical ball mill conditions, the raw material powders are placed in a ZrO₂ pot containing balls, for example, ZrO₂ balls, having a diameter of approximately several tens of mm, which are then mechanically ground using a planetary ball mill grinding device at a range of 100 rpm to 2000 rpm for several seconds to several tens of hours. Typical vibration mill conditions include a vibration amplitude of the vibration mill in the range of, for example, 5 mm to 15 mm, and more preferably in the range of 6 mm to 10 mm. The vibration frequency of the vibration mill may be in the range of, for example, 500 rpm to 2000 rpm, and more preferably in the range of 1000 rpm to 1800 rpm. The filling rate of the sample in the vibration mill may be the range of, for example, 1 vol.% to 80 vol.%, more preferably in the range of 5 vol.% to 60 vol.%, and further preferably in the range of 10 vol.% to 50 vol.%. In addition, a vibrator (e.g., an alumina vibrator) may be used for the vibration mill. The mixing time may be appropriately adjusted in the range of several seconds to several tens of hours depending on the amounts to be mixed and the degree of mixing.

The precursor powder is compressed in a pellet molder and then heated to be fired into a solid electrolyte material. During this heating, the precursor powder is arranged in a vacuum or inert atmosphere. The operations are not particularly limited as long as heating can be performed in a vacuum or inert atmosphere.

The heating temperature can be appropriately adjusted, and may be 100°C or higher and 500°C or lower.

The heated and fired products obtained at a heating temperature outside the above range may not contain sufficient amounts of sulfide solid electrolyte material having a desired composition or crystal structure, which may be confirmed by X-ray diffraction measurement.

More specifically, when the heating temperature is lower than 100°C, the reaction will not proceed and a large amount of unreacted material will remain, making it impossible to obtain a synthetic product of the intended composition. When the heating temperature is higher than 500°C, the synthetic product will be thermally decomposed, an unintended composition will be produced, which may reduce the yield of the synthetic product of the desired composition.

Note that the heating time may be appropriately adjusted depending on the heating temperature and the amount of the precursor powder charged. For example, the heating time may include the temperature rise time and the holding time, and each time may be within the range of 30 minutes to 48 hours.

After heating is complete, the heated and fired product may be cooled to room temperature by natural cooling or by annealing.

Alternatively, the precursor powder may be heated while being stirred by rotating the heating vessel for heating the precursor powder.

The vessel for heating the precursor powder is not particularly limited, and is preferably rotatable from the viewpoint of heating efficiency and stirring efficiency. The heating vessel is preferably substantially cylindrical in shape, in order to facilitate rotation in the axial direction of the cylinder.

The rotation speed can be appropriately adjusted in consideration of heating efficiency, and may be 1 to 100 rpm. When the rotation speed is less than 1 rpm, the effect of improving heating efficiency and stirring efficiency by rotation may not be sufficient. The upper limit of the rotation speed is not particularly limited, but since the effect of increasing the rotation speed tends to saturate and the equipment cost increases, the upper limit may be set to 100 rpm.

In the series of steps included in the production method described above, it is preferable to carry out the steps in a glove box or the like under an inert gas atmosphere such as argon in order to prevent deterioration of the raw material powder, the precursor powder, and the obtained sulfide solid electrolyte material due to moisture in the air.

### (X-ray Diffraction Measurement)

In the present description, unless otherwise specified, X-ray diffraction measurement is carried out as follows.

In order to identify the crystals contained in the sample to be measured, powder X-ray diffraction measurements are performed using powder X-ray diffractometers Ulima-IV (manufactured by Rigaku Corporation) and Smart Lab (manufactured by Rigaku Corporation). For the powder X-ray diffraction measurements, Cu-Kα rays with an X-ray wavelength of 1.5418 angstroms are used. Powder X-ray diffraction measurements are performed at diffraction angles (20) in the range of 10 to 60° with a step size of 0.01°.

Where necessary, synchrotron X-ray diffraction measurements are also performed at an X-ray wavelength of 0.5 angstrom using the BL19B2 beamline at SPring-8. Samples are sealed in

Lindemann glass capillaries (inner diameter about 0.3 mm) under an Ar atmosphere. Diffraction data is collected at 25° between 0 and 78° with a step size of 0.01°. The Z-Rietveld program is used to refine the structural parameters.

In addition, neutron diffraction data is collected using a time-of-flight (TOF) diffractometer (SPICA) installed at the BL09 beamline of the Japan Proton Accelerator Research Complex. The samples are sealed in vanadium cells (diameter about 6 mm) with an indium ring. The samples are measured at 4 K and 300 K. The Z-Rietveld program is used to refine the structural parameters.

### (Ionic Conductivity Measurement)

In the present description, unless otherwise specified, the ionic conductivity is measured as follows.

Ionic conductivity is measured using an alternating current (AC) impedance method. For measurements of compressed powder samples (cold press), pellets (diameter = 5 mm, thickness 1 to 2 mm) of the sulfide solid electrolyte material are prepared to a relative density of approximately 85% under a pressure of 370 MPa and measured at room temperature (25°C).

To evaluate the bulk ionic conductivity, measurements are performed on sintered pellets obtained via hot pressing at temperatures between -50 and 60°C. In the hot-pressing method, the sulfide solid electrolyte material is pressed into a pellet (diameter = 5 mm, thickness 1 to 2 mm) and heated at 400°C and 370 MPa for 1 hour. The sulfide solid electrolyte material sample is then interposed between stainless steel blocking electrodes.

All impedance measurements are performed using a Bio-Logic VSP-300 instrument, applying a voltage amplitude of 10 mV and a frequency range of 1 Hz to 7 MHz.

### (Production of All-Solid-State Battery)

An all-solid-state battery may be produced using the sulfide solid electrolyte material according to an embodiment of the present invention. The production method is not limited, and the battery can be produced by a known method.

### (Cycle Testing of All-Solid-State Battery)

The all-solid-state battery can also be cycled to confirm the battery performance thereof. Cycle tests are performed using a Bio-Logic VSP-300 instrument at voltages ranging from 1.9 to 3.6 V and temperatures of 25, 10, 0, and -10°C. FIG. 7 shows the cycle test results for a cell containing a 245 mg cm⁻² positive electrode composite (171 mg cm⁻² LNO-coated LCO), where the current density corresponding to 1 C rate is 23.5 mA cm⁻². During the charge-discharge cycles, electrochemical impedance spectroscopy (EIS) is performed at 25°C in the charged state using a Biologic VSP with a frequency range of 10 mHz to 1 MHz and an amplitude voltage of 10 mV.

An all-solid-state battery, and in particular, a positive electrode, may be produced using the sulfide solid electrolyte material according to an embodiment of the present invention. The thickness of the positive electrode may be increased to 800 µm or more, or 1000 µm or more. The upper limit of the thickness is not particularly limited, may be appropriately adjusted according to the dimensional restrictions of the battery, and may typically be 10 mm or less, 8 mm or less, 6 mm or less, 4 mm or less, 2 mm or less. Through cycle tests of longer than 100 days, the all-solid-state battery has been confirmed to be very useful in that it can stably operate at temperatures as low as -10°C and that the positive electrode loading mass can be increased.

### EXAMPLES

The present invention will be described in more detail below with reference to Examples, but the present invention is not limited to the following Examples.

Li_{9.54}Si_{1.74}P_{1.44}S_{11.7}Cl_{0.3} (LSiPSCl) was selected as the base sulfide solid electrolyte material, and first, multi-anion substitution with halogen and oxygen was attempted, and the Si atoms were then partially replaced with Ge or Sn atoms.

More specifically, the elements or compounds as raw materials were weighed in appropriate amounts to obtain the desired compositions, and mixed for 15 minutes using a mortar. Next, each mixture was placed in a ZrO₂ pot containing ZrO₂ balls (Φ 10 mm), and then mechanically ground for 40 hours at 380 rpm using a planetary ball mill grinding device. The ground sample was then pressed to form pellets, heated from room temperature to the synthesis temperature of 475°C over 3 hours, maintained at that temperature for 8 hours, and then naturally cooled to 25°C to obtain the composition.

The compositions actually attempted are shown in Table 2. The obtained compositions were subjected to XRD analysis, and the mass ratio of the contained phases (phase purity) was determined by Rietveld analysis. Only those in which the phases could be identified were analyzed. Li_{9.54}Si_{1.74}P_{1.44}S_{11.4}I_{0.3}O_{0.3} contained an unknown phase, and likewise, Li_{9.54}Ge_{1.74}P_{1.44}S_{11.1}Br_{0.3}O_{0.6} contained the secondary phase with an unidentified structure of Li₂GeS₃.

The ionic conductivities of the obtained compositions were measured using an alternating current (AC) impedance method.

The obtained phase purities and ionic conductivities (including contributions from the bulk as well as the resistive components at the grain boundaries and electrode interfaces) are also shown in Table 2. FIG. 1 shows X-ray diffraction spectra when the ratio of Si atoms substituted with Ge or Sn atoms is changed.

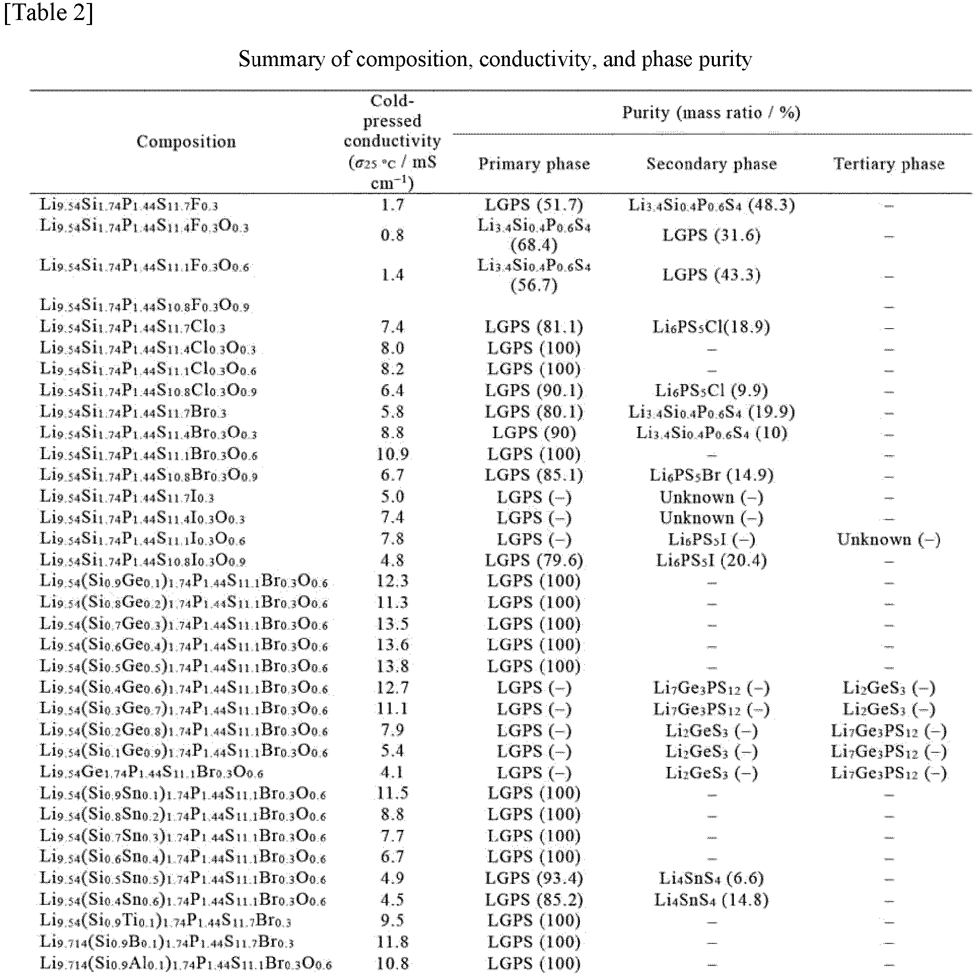

Through the search for the above compositions, novel sulfide solid electrolyte materials could be obtained, and in particular, sulfide solid electrolyte materials having lithium-ion conductivity substantially equal to or exceeding that of LGPS could be obtained.

### Discharge Performance with Thick Cathode Configuration

To evaluate the advantages of the sulfide solid electrolyte material according to the present invention, an all-solid-state battery (LSiGe_{0.4}PSBrO cell) comprising a positive electrode composite material was fabricated using Li_{9.54}[Si_{0.6}Ge_{0.4}]_{1.74}P_{1.44}S_{11.1}Br_{0.3}O_{0.6} as the electrolyte (catholyte) to wet the positive electrode active material of LiNbOs-coated LiCoO₂. The weight ratio of the positive electrode active material (LNO-coated LCO) to the electrolyte (catholyte) was 7:3. To assemble the all-solid-state cell for measurement, Li_{11.25}P₃S_{12.75}I_{0.75} (LPSI) powder (80 mg) was pressed into pellets in an insulator tube (diameter = 10 mm) as the solid electrolyte layer. To avoid cell capacity being limited by the In-Li negative electrode, an excess of In foil was used.

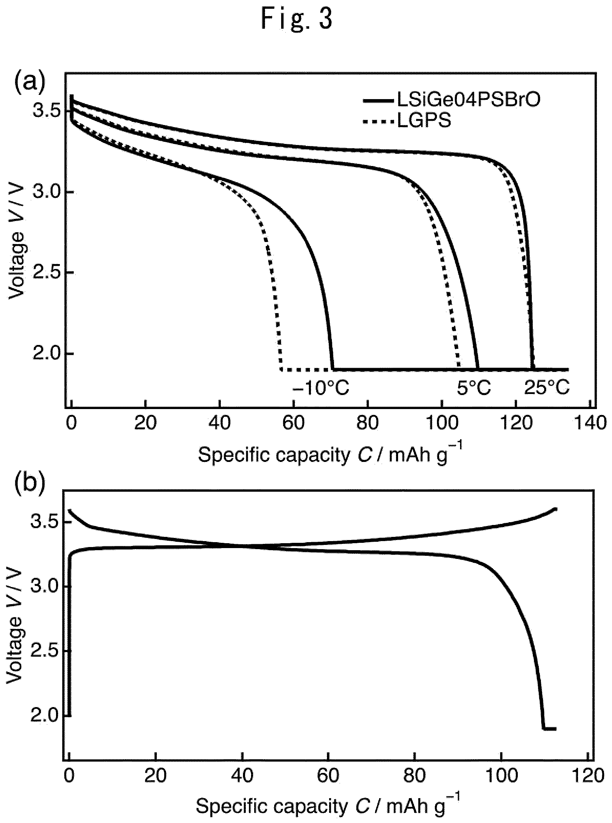

An all-solid-state battery (LGPS cell) was prepared using LGPS as the electrolyte (catholyte) of the reference cell. In both the LSiGe_{0.4}PSBrO cell and the LGPS cell, a thick cathode configuration with 40 mg of cathode composite material was adopted. This thickness can correspond to about eight times that of a typical laboratory-scale all-solid-state cell. FIG. 3(a) shows the discharge curves at 0.5 Crate for those cells at various temperatures. At 25°C, both cells demonstrated the same high discharge capacity value of 125 mAh g⁻¹, which is comparable to the theoretical value of 137 mAh g⁻¹ (4.2 V vs Li⁺/Li). However, with a gradual decrease in the operating temperature, the LGPS cell demonstrated a rapid decrease in discharge capacity compared to the LSiGe_{0.4}PSBrO cell. Specifically, at a low temperature of -10°C, the LSiGe_{0.4}PSBrO cell had a discharge capacity of 70 mAhg⁻¹, which was 29% higher than the LGPS cell. This significant difference in discharge capacity indicates that increasing the ionic conductivity of the solid electrolyte is important for optimizing the charge transfer of the cathode composite.

An all-solid-state battery consisting of a thicker cathode composite of 100 mg was also prepared for the LSiGe_{0.4}PSBrO cell, which corresponds to a high areal capacity loading of 12.2 mAh cm⁻². FIG. 3(b) shows the charge-discharge curves of this all-solid-state battery at 25°C and 0.05 C/0.05 C (0.61 mA cm⁻²) charge/discharge rates, and a high discharge capacity of 110 mAh g⁻¹ was obtained.

When cells using the sulfide solid electrolyte material according to the present invention are arranged in a multi-stack structure, a cell having even higher energy density can be produced.

A follow-up experiment was performed on an LSiGe_{0.4}PSBrO cell. A solid-state cell was prepared in a similar manner to that described above, except that the positive electrode mixture was loaded at 245 mg cm⁻² (corresponding to 171 mg cm⁻² LNO-coated LCO, with an in-plane theoretical capacity of 23.5 mAh cm⁻² and a thickness of 800 µm).

FIG. 7A shows the discharge curves at a current density of 0.587 mA cm⁻² (0.025 C rate) in the temperature range from 25°C to -10°C. At 25°C, an areal discharge capacity of 22.7 mAh cm⁻² was observed with a cutoff voltage of 4.25 V vs. Li+/Li and 97% utilization efficiency for the input LCO. The inset in FIG. 7A shows a cross-sectional SEM image of the solid-state cell from the follow-up experiment (cathode composite pellet with a capacity of 23.5 mAh cm⁻²).

FIG. 7B shows a comparison of the areal discharge capacity between an all-solid-state battery using a sulfide solid electrolyte material according to an embodiment of the present invention and the all-solid-state lithium batteries reported in Non-Patent Literature 7 to 12. The applied current density was 0.2 to 0.68 mA cm⁻². The areal discharge capacity of the present embodiment was the highest.

FIG. 7C shows a comparison of the areal discharge capacity (bottom) and the discharge capacity retention rate (top) at 25°C and below for the present embodiment and those reported in Non-Patent Literature 7 and 9. As the temperature decreased, the areal discharge capacity gradually decreased and the overvoltage increased. This overvoltage is believed to be due to the gradual decrease in the ionic conductivity of LSiGe_{0.4}PSBrO at low temperatures. Nevertheless, in the present embodiment, the discharge capacity at -10°C was 75% of the discharge capacity at 25°C. Compared to the high-load all-solid-state batteries reported in Non-Patent Literature 7 and 9, the solid-state cell according to the present embodiment, which had an increased weight of the positive electrode, had an improved capacity retention rate at low temperatures (FIG. 7C).

The sulfide solid electrolyte material of the present embodiment has such excellent performance, and is expected to expand the use of all-solid-state lithium batteries that have thick electrodes and operate under low-temperature conditions.

A cycle test was carried out using the all-solid-state lithium battery having electrodes having a thickness of 800 µm described above.

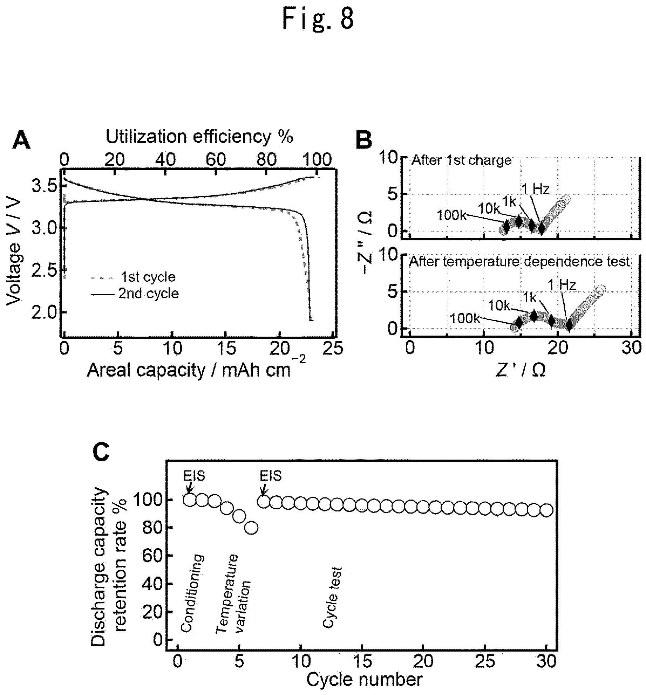

First, as shown in FIG. 8(A), two cycles were performed at 25°C and a current density of 0.587 mA cm⁻² (0.025 C rate) to confirm that the active material of the positive electrode was fully utilized. The temperature dependence of the battery performance was then measured, and the results shown in FIG. 7 were obtained.

After the temperature dependency measurement, EIS (electrochemical impedance measurement) was performed in the charged state to investigate the impedance change caused by cycling. FIG. 8(B) compares the Nyquist plot obtained from EIS with the Nyquist plot recorded after the first charge. The high-frequency semicircle from 100k to 1k Hz, which corresponds to the electrochemical process of the positive electrode, changes from 4.3 Ω (after the first charge) to 4.9 Ω (after the temperature dependency test), and no significant change is observed. This result suggests that the LiSiGe_{0.4}PSBrO used in the positive electrode electrolyte had not decomposed even after several cycles.

Finally, a cycle test was performed at a rate of 0.025 C, and the results are shown in FIG. 8(C). The discharge capacity retention rate was 92% at the thirtieth cycle, indicating that the LiSiGe_{0.4}PSBrO was dynamically stable at an electrochemical potential of 4.25 V vs. Li+/Li (3.6 V vs. Li+/In-Li) during a long-term test period of 100 days or more.

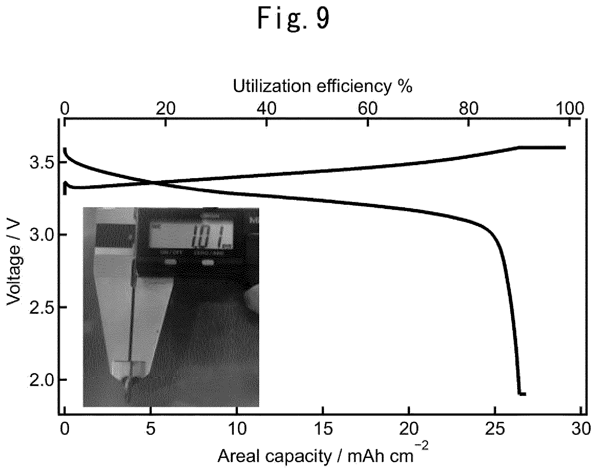

An all-solid-state lithium battery comprising a 1 mm (1000 µm) thick electrode was prepared, and the charge/discharge operation was confirmed. FIG. 9 shows the discharge curve of a 1 mm thick electrode having a capacity load of 29.3 mAhcm⁻² under the conditions of 25°C and 0.73 mAcm⁻² (0.025 C). The utilization efficiency was 90%. The inset in FIG. 9 shows the measurement result of the electrode thickness.

Through these Examples, it was confirmed that the sulfide solid electrolyte material of the present embodiment can be applied to all-solid-state batteries, and is particularly useful in that it allows low-temperature operation and increases the positive electrode loading mass.

## Claims

1. A sulfide solid electrolyte material, having the composition:
Li_{9.54}[Si_{1-δ}M_{δ}]_{1.74}P_{1.44}S_{11.1}Br_{0.3}O_{0.6},
Li_{9.54}[Si_{1-δ}M_{δ}]_{1.74}P_{1.44}S_{11.7}Br_{0.3},
Li_{9.714}[Si_{1-δ}M'_{δ}]_{1.74}P_{1.44}S_{11.1}Br_{0.3}O_{0.6}, or
Li_{9.714}[Si_{1-δ}M'_{δ}]_{1.74}P_{1.44}S_{11.7}Br_{0.3}, wherein
M is Ge, Sn, or Ti, and M' is either B or Al,
when M is Ge, 0 ≤ δ ≤ 0.5,
when M is Sn, 0 ≤ δ ≤ 0.4,
when M is Ti, 0 ≤ δ ≤ 0.1,
when M' is B, 0 ≤ δ ≤ 0.1, and
when M' is Al, 0 ≤ δ ≤ 0.1.

2. The sulfide solid electrolyte material according to claim 1, having the composition:
Li_{9.54}Si_{1.74}P_{1.44}S_{11.1}Br_{0.3}O_{0.6},
Li_{9.54}[Si_{0.9}Ge_{0.1}]_{1.74}P_{1.44}S_{11.1}Br_{0.3}O_{0.6},
Li_{9.54}[Si_{0.8}Ge_{0.2}]_{1.74}P_{1.44}S_{11.1}Br_{0.3}O_{0.6},
Li_{9.54}[Si_{0.7}Ge_{0.3}]_{1.74}P_{1.44}S_{11.1}Br_{0.3}O_{0.6},
Li_{9.54}[Si_{0.6}Ge_{0.4}]_{1.74}P_{1.44}S_{11.1}Br_{0.3}O_{0.6},
Li_{9.54}[Si_{0.5}Ge_{0.5}]_{1.74}P_{1.44}S_{11.1}Br_{0.3}O_{0.6},
Li_{9.54}[Si_{0.9}Sn_{0.1}]_{1.74}P_{1.44}S_{11.1}Br_{0.3}O_{0.6},
Li_{9.54}[Si_{0.8}Sn_{0.2}]_{1.74}P_{1.44}S_{11.1}Br_{0.3}O_{0.6},
Li_{9.54}[Si_{0.7}Sn_{0.3}]_{1.74}P_{1.44}S_{11.1}Br_{0.3}O_{0.6},
Li_{9.54}[Si_{0.6}Sn_{0.4}]_{1.74}P_{1.44}S_{11.1}Br_{0.3}O_{0.6},
Li_{9.54}[Si_{0.9}Ti_{0.1}]_{1.74}P_{1.44}S_{11.7}Br_{0.3},
Li_{9.714}[Si_{0.9}B_{0.1}]_{1.74}P_{1.44}S_{11.7}Br_{0.3}, or
Li_{9.714}[Si_{0.9}Al_{0.1}]_{1.74}P_{1.44}S_{11.1}Br_{0.3}O_{0.6}.

3. The sulfide solid electrolyte material according to claim 1 or 2, having the composition of Li_{9.54}[Si_{0.6}Ge_{0.4}]_{1.74}P_{1.44}S_{11.1}Br_{0.3}O_{0.6}.

4. The sulfide solid electrolyte material according to any one of claims 1 to 3, having a lithium-ion conductivity of 3.2 × 10⁻² S/cm or more.

5. The sulfide solid electrolyte material according to any one of claims 1 to 4, having peaks at positions of 2θ = 12.33±0.04°, 14.34±0.03°, 17.32±0.08°, 20.11±0.07°, 20.33±0.04°, 23.45±0.11°, 23.84±0.05°, 26.83±0.07°, 28.90±0.05°, 29.46±0.22°, 31.52±0.05°, and 33.19±0.06° in X-ray diffraction measurement using CuKα radiation.

6. The sulfide solid electrolyte material according to any one of claims 1 to 5, comprising a tetragonal unit cell having a space group of P4₂/nmc(137), wherein
the unit cell has a crystal structure containing:
Li(2)[S/Br/O]₆ octahedrons,
Si(1)/M(1)/P(1)[SBr/O]₄ tetrahedrons,
Si(2)/P(2)[S/Br/O]₄ tetrahedrons,
Li(4)[S/Br/O]₆ octahedrons, and
Li(1), Li(3a), and Li(3b) sites,
the Li(2)[S/Br/O]₆ octahedrons and the Si(1)/M(1)/P(1)[SBr/O]₄ tetrahedrons form a one-dimensional framework structure,
the Si(2)/P(2)[S_{B}r/O]₄ tetrahedrons are positioned between the Li(2)[S/Br/O]₆ octahedrons and are connected by corner sharing to form a three-dimensional framework structure,
the Li(4)[S/Br/O]₆ octahedrons are connected to the Si(2)/P(2)[S/Br/O]₄ tetrahedrons by edge sharing, and
the Li atoms at the Li(1), Li(3a), and Li(3b) sites can move along the c-axis, i.e., the [001] direction.
